# EUROPEAN PATENT APPLICATION

(11) **EP 3 593 985 A1**
(43) Date of publication of application: **15.01.2020**
(21) Application number: 19194799.3
(22) Date of filing: 24.01.2018
(51) Int. Cl.: B31D 1/00, B31F 5/06, A63F 9/08, B32B 3/18

(54) **A CUT AND TAPED SUBSTRATE**

(30) Priority: 27.01.2017 US 201762451385 P
(62) Divisional of application: 18744891.5
(71) Applicant: SFC Ltd., Toledo, OH 43604 (US)
(72) Inventor: CLARK, Thomas, Toledo OH 43604 (US)
(74) Representative: Pfenning, Meinig & Partner mbB

(57) **Abstract**

A substrate (22) comprising a first side (106) and a second side (108) opposite the first side. A first flexible joint in the substrate comprises a first cut (126) through said first side to said second side, said first cut creating a first section (148) and a second section (150). A first length of tape (128) connects said first section and said second section on only said second side. A second flexible joint comprises a second cut (138) through said first side to said second side. Said second cut may be transverse to said first cut, creating a third section (152) and a fourth section. A second length of tape (154) may connect the additional sections created by the second cut.

## Description

### FIELD

The device relates to a method and apparatus for cutting and taping a substrate and a product made by the method.

### BACKGROUND

Mailing goods is a well-known way to have transport goods from one location to another. Of course, the mailing service, regardless of whether it is USPS, UPS, FedEx or any other carrier, charges a fee proportional to the size and weight of the package, and the location from which it is shipped from to the location it is shipped to.

With the proliferation of package mailing in the recent past, competition among online service providers to mail consumers goods in the most cost-effective manner has significantly increased.

Many goods, such as posters, pictures, samples, displays and/or wall hangings, are often rolled up and mailed in tubes or are put in large envelopes or boxes. Each of these shipping methods is relatively expensive, which drives up the cost to the consumer, or the manufacturer/supplier has to absorb the shipping cost.

In view of the disadvantages discussed above, it would be advantageous for goods to be shipped in standard size mailing envelopes to reduce shipping costs and the cost of the shipping material.

It would also be advantageous for the goods to be located in a standard size shipping envelope without comprising the integrity or appearance of the goods. Namely, to fit a large item in a standard size shipping envelope, it must be folded, which often will damage or ruin pictures, posters, samples, displays or wall hangings with creases. It would be advantageous for the item to be able to be folded in a manner that does not negatively affect the appearance of the item.

### SUMMARY

In one embodiment a method for cutting and taping a substrate includes providing a substrate having a first side, a second side opposite the first side, and a perimeter. A first flexible joint is created in the substrate by making a first cut through the first side to the second side making first and second sections. A first length of tape is located along at least a portion the first cut to secure the sections together. A second flexible joint is created in the substrate by making a second cut through the first side to the second side. A second length of tape may connect the additional sections created by the second cut.

### BRIEF DESCRIPTION OF THE DRAWINGS

The above, as well as other advantages of the present method and apparatus, will become readily apparent to those skilled in the art from the following detailed description when considered in the light of the accompanying drawings in which:
Fig. 1 is a schematic, perspective, exploded view of one embodiment of an apparatus for cutting and taping a substrate;
Fig. 2 is a schematic, perspective, exploded view of one embodiment of a vacuum table, a component of the apparatus in Fig. 1;
Fig. 3 is a schematic, perspective view of one embodiment of a carriage system for the vacuum table, a component of the apparatus of Fig. 1;
Fig. 4 is a schematic, perspective, exploded view of one embodiment of a cutting blade system, a component of the apparatus of Fig. 1;
Fig. 5 is a schematic, perspective, exploded view of one embodiment of a locator bar, a component of the apparatus of Fig. 1;
Fig. 6 is a schematic, perspective, exploded view of one embodiment of a tape assembly, a component of the apparatus of Fig. 1;
Fig. 7 is a schematic, perspective view of one embodiment of a tape path to the tape assembly;
Fig. 8 depicts a substrate with parallel first and second taped cuts;
Fig. 9 depicts the substrate of Fig. 8 with a cut transverse to the first and second taped cuts;
Fig. 10 depicts a substrate with a taped cut that has also been slit;
Fig. 11A depicts one side of a substrate that has been cut and taped;
Fig. 11B depicts an opposite side of the substrate shown in Fig. 11A that has been cut and taped;

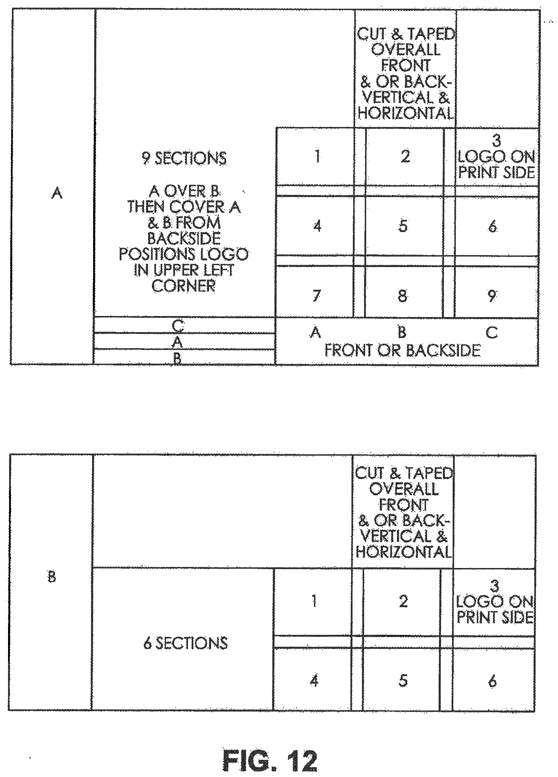

Fig. 12A schematically depicts another embodiment of a substrate with cut and tape lines for the front or the back of the substrate and optional folding steps;
Fig. 12B schematically depicts another embodiment of a substrate with cut and tape lines for the front or back of the substrate;

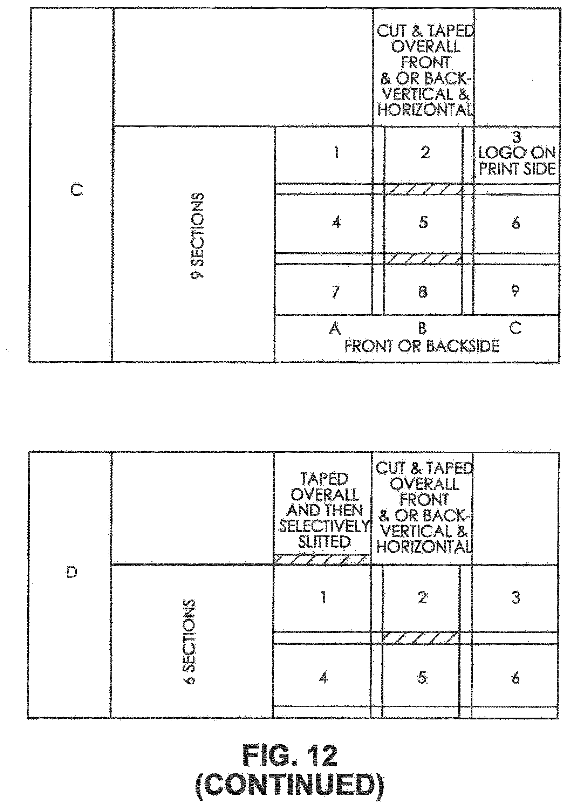

Fig. 12C schematically depicts another embodiment of a substrate with cut and tape lines for the front or back of the substrate with additional slits;
Fig. 12D schematically depicts another embodiment of a substrate with cut and tape lines for the front or back of the substrate with an additional slit;

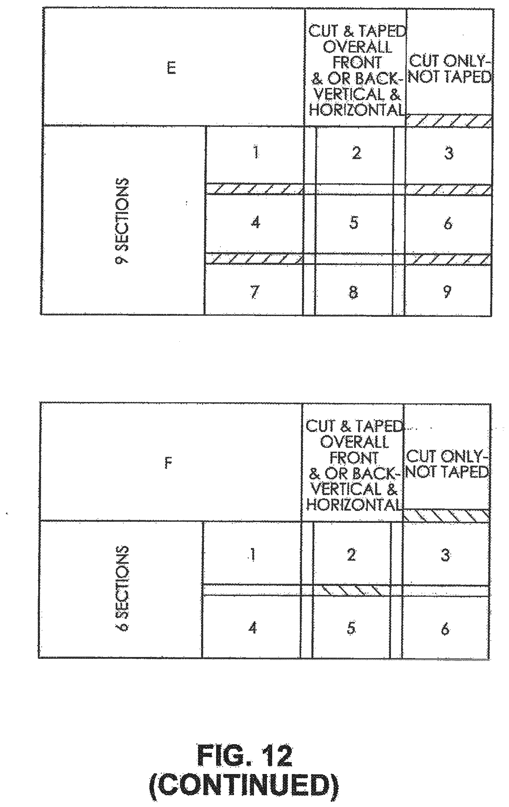

Fig. 12E schematically depicts another embodiment of a substrate with cut and tape lines for the front or back of the substrate with portions that are slit but not taped;
Fig. 12F schematically depicts another embodiment of a substrate with cut and tape lines for the front or back of the substrate with a portion that is cut but not taped;

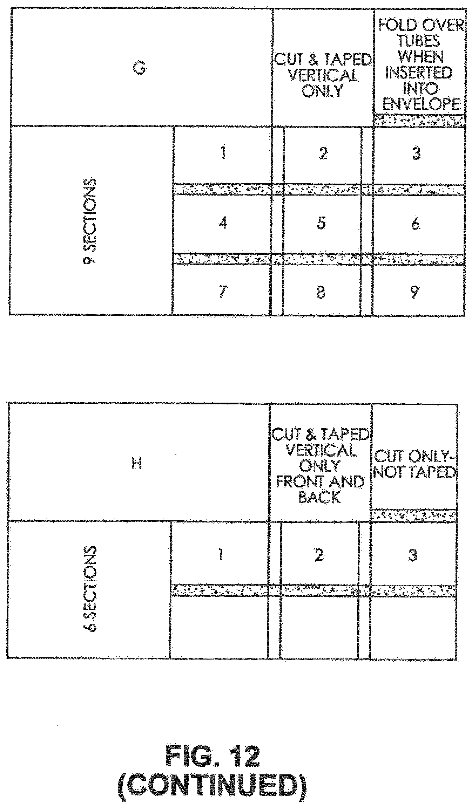

Fig. 12G schematically depicts another embodiment of a substrate with cut and tape lines for the front or back of the substrate with areas highlighted for fold over tubes; and
Fig. 12H schematically depicts another embodiment of a substrate with cut and tape lines for the front or back of the substrate with areas highlighted for fold over tubes.

### DETAILED DESCRIPTION

It is to be understood that the method and apparatus may assume various alternative orientations and step sequences, except where expressly specified to the contrary. It is also to be understood that the specific devices and processes illustrated in the attached drawings, and described in the following specification are simply exemplary embodiments of the concepts defined in the appended claims. Hence, specific dimensions, directions or other physical characteristics relating to the embodiments disclosed are not to be considered as limiting, unless the claims expressly state otherwise.

Disclosed herein is a method and apparatus to cut, tape and fold an item so that it can be shipped/mailed in an economical manner without having a negative effect on the appearance or use of the item.

Despite reference to shipping/mailing, it can be appreciated that the item does not have to be shipped/mailed at all. Instead, the method and apparatus disclosed herein can be used to result in an item that can be compactly stored or filed. Using the disclosed method and apparatus, the resulting item can be repeatedly folded and unfolded for storage or use without having a negative effect on the appearance or use of the item.

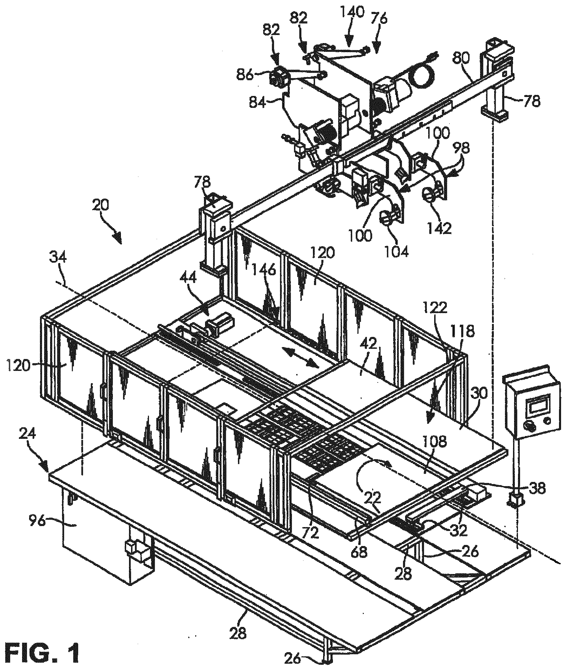

The method and apparatus may begin with a machine 20 that can cut and tape a substrate 22, one embodiment of which is schematically depicted in Fig. 1.

In the depicted embodiment, the machine 20 has a base frame 24. The base frame 24 may be comprised of one more vertical legs 26 and one more supports 28. The supports 28 may be attached to the legs 26, and the supports 28 may be angled with respect to the legs 26. The legs 26 extend from the supports 28 to the floor. The legs 26 may be adjustable so as to accommodate floor that is not level.

A vacuum table 30 may be connected to the base frame 24. More particularly, the vacuum table 30 may be slidably connected to the base frame 24. The slidable connection between the vacuum table 30 and the base frame 24 may be effected through the following exemplary structures.

In one embodiment, two rails 32 may be secured to the base frame 24. The rails 32 are secured parallel to a major axis 34 of the machine 20. The rails 32 may extend along the major axis 34 substantially the same as one another being in the same plane as one another and being the same shape and length.

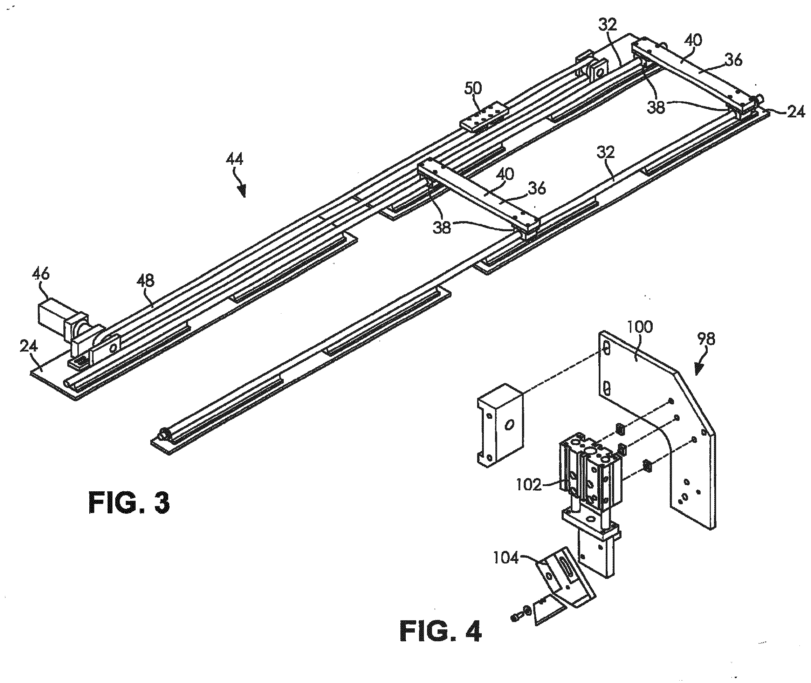

At least one glide plate 36 with bushings, bearings and/or rollers (hereinafter glides 38) mounted for selectively movement along the rails 32 is provided. In the embodiment depicted in Figs. 1 and 3, two glides plates 38 are mounted on the rails 32 and secured to an underside of the vacuum table 30.

The glides 38 are mounted beneath the glide plates 36. The glides 38 are in contact with, such as at least partially surround, the rails 32. The glides 38 facilitate selective movement of the glide plates 36, and thus the vacuum table 30, along the stationary rails 32.

An upper surface 40 of the glide plate 36 is attached to a lower surface 42 of the vacuum table 30 so that the two move as one unit.

The glide plate 36 and/or the vacuum table 30 are connected to a belt slide assembly 44. One embodiment of the belt slide assembly 44 is shown in Figs. 1 and 3. The belt slide assembly 44 comprises a motor 46, a drive belt 48 and a belt plate 50. The belt plate 50 is fixedly connected to the drive belt 48 so that they move together. In one embodiment, the belt plate 50 may be located above the drive belt 48.

The drive belt 48 may be such as a continuous loop chain or belt. The motor 46 is located within the loop and is capable of forward or reverse rotation to drive the belt 48, and thus the belt plate 50, in in either direction along the major axis 34. The drive belt 48, and thus the belt plate 50, selectively move in a single plane that is parallel the major axis 34.

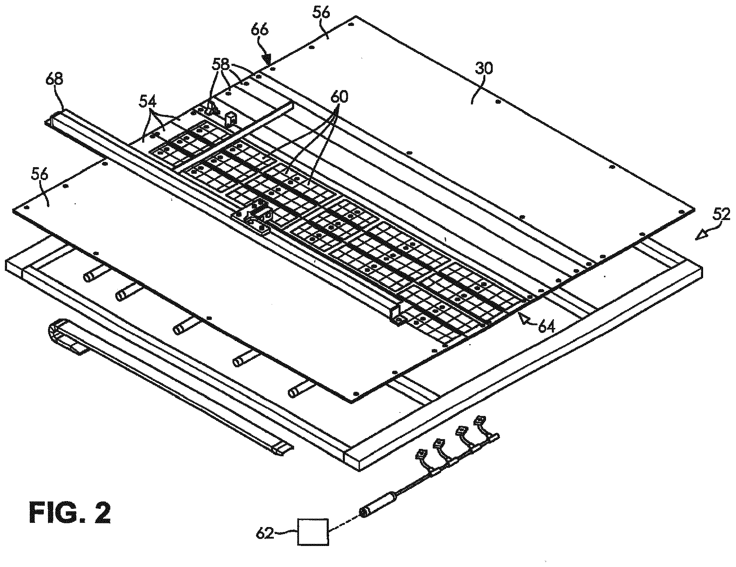

Turning now to Figs. 1 and 2, one embodiment of the vacuum table 30 is depicted. The vacuum table 30 may be a substantially planar table with a lower frame assembly 52, vacuum plates 54, side plates 56 and at least one removable leaf plate 58. It is the lower frame assembly 52 that is preferably attached to the belt plate 50 and the glide plates 36.

The vacuum plates 54, the side plates 56 and the at least one removable leaf plate 58 may all be selectively detachable from the lower frame assembly 52. By being detachable any combination of plates and any size of the plates may be used to accommodate any size of the size of the substrate 22.

In the depicted embodiment, the vacuum plates 54 and the at least one removable leaf plate 58 are sandwiched between the side plates 56. The side plates 56 may be substantially planar and solid. They are designed primarily as support surfaces or structures to bound the leaf 58 and vacuum plates 54.

The vacuum plates 54 may have a plurality of apertures 60, or slits, that extend through the plates 54. Beneath the plates 54, the apertures or slits 60 are connected to at least one vacuum source 62. The number, location, shape and size of the apertures/slits 60 is dependent upon the size, shape and weight of the substrate 22, as well as the desired suction forced desired to maintain the substrate 22 in a selectively secure location on the vacuum table 30 during the cutting and taping process described below. If the substrate 22 is permitted to move during the cutting or taping process, it may result in an inaccurate cut or taping location.

As shown in Fig. 2, the leaf plates 58 may have different widths from one another. By selecting the vacuum plates 54 needed for a particular substrate 22, one can then fill in the gap between the vacuum plates 54 and the side plates 56 by selecting correctly sized leaf plates 58.

Preferably, the side plates 56, the vacuum plates 54 and the leaf plates 58 have the same length which gives the vacuum table 30 a uniform leading edge 64 and trailing edge 66.

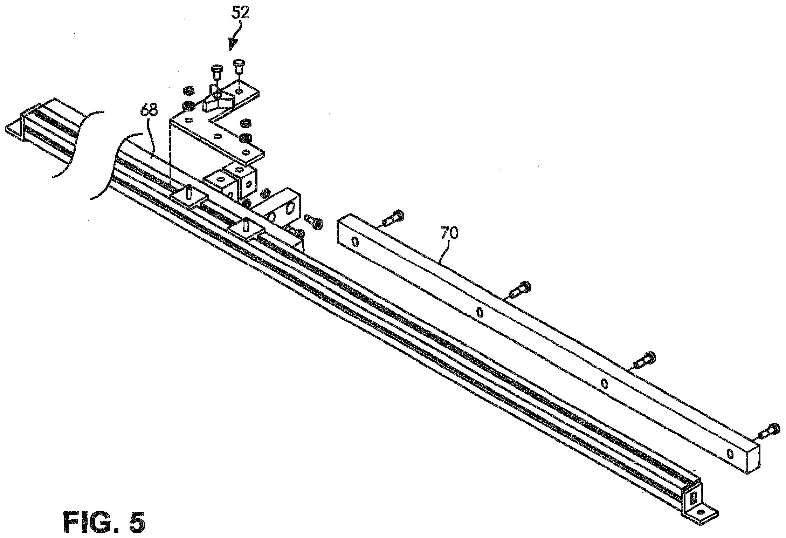

A guide fence 68 may be selectively attached to the vacuum table 30. In the embodiment depicted in Fig. 2 and 5, the guide fence 68 may be attached to the side plate 56 directly adjacent a vacuum plate 54. In other words, an inside edge surface 70 of the guide fence 68 may be at the intersection of the side plate 56 and the vacuum plate 54.

The inside edge surface 70 of the guide fence 68 may act as a stop for the substrate 22 to be aligned and temporarily fixed against. The guide fence 68 thus acts as a locator for the substrate 22 and it helps to temporarily fix the substrate 22 in a predetermined location on the vacuum table 30.

A top edge fence 72 may be selectively attached to the guide fence 68. The top edge fence 72 may be slidably connected to the guide fence 68 so that it can slide along the length of the guide fence 68. The top edge fence 72 may also be selectively secured to the guide fence 68 in a selected location, such as with a tightening screw.

The top edge fence 72 may be used to create an upper limit or boundary for the substrate 22. The top edge fence 72 may be located in direct contact with an upper edge surface (which will also be called a first edge herein) 74 of the substrate 22. The top edge fence 72 thus functions to locate and secure the substrate 22 on the vacuum table 30.

While only a single guide fence 68 is depicted in Fig. 2, additional guide fences and top edge fences are permissible. For example, it may be desirable to have a guide fence and top edge fence on either side of the substrate 22. That is, a guide fence on either side of the vacuum plates 54 so as to bound, or sandwich, the substrate 22 between them. And, top edge fences so as to provide an upper limit or boundary across at least a portion of the upper edge surface 74 of the substrate 22.

Turning back to Fig. 1, one embodiment of a cutting and taping apparatus 76 for the machine 20 is depicted. The apparatus 76 comprises two risers 78. The two risers 78 are located across from one another. They may be located on, or attached to, the base frame 24. The vacuum table 30 is designed to move between the two risers 78, which are fixed in their location.

A support bar 80 spans between the two risers 78 and is fixed thereto. The support bar 80 extends above the vacuum table 30; the support bar 80 extends primarily perpendicular to the direction of movement of the vacuum table 30 and the major axis 34 of the machine 20.

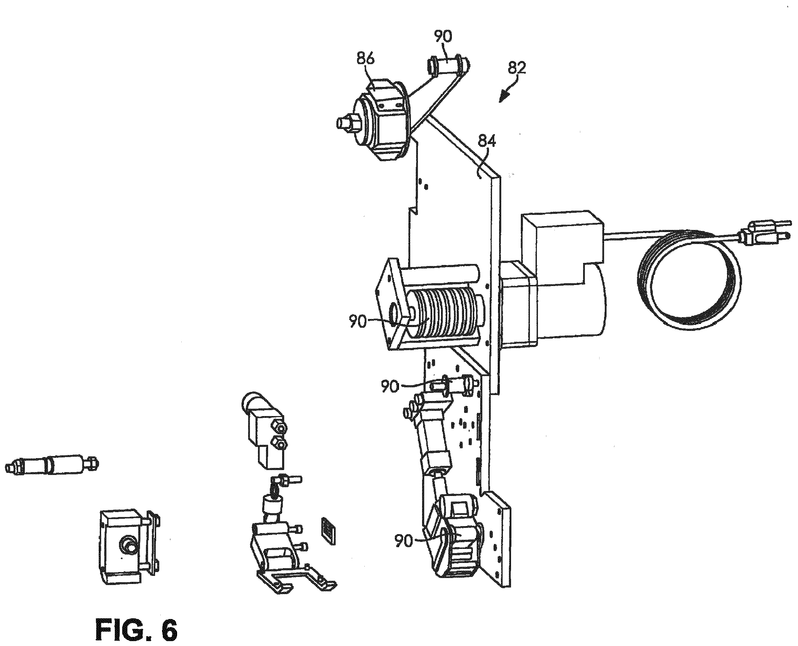

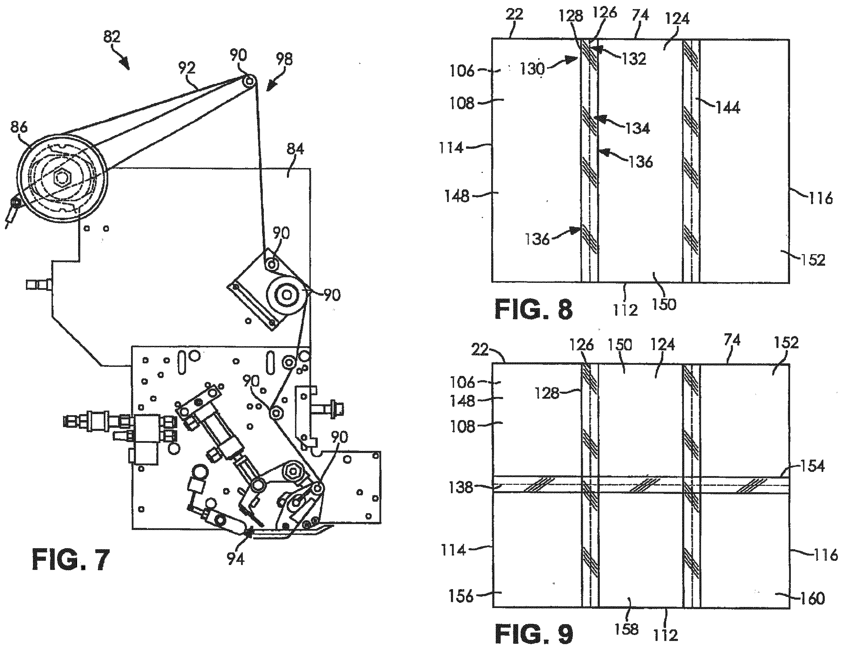

At least one taping device 82 is secured to the support bar 80, such as with a mounting plate 84. The taping device 82 may comprises a source 86 for tape 92, a tape path 88 and a plurality of rollers 90 in the tape path 88 designed to tension and position the tape 90 for location the substrate 22, as shown in Figs. 6 and 7. Some of the rollers 90 may be passive while others may be active. An active tape roller 90 may be one that is powered, such as connected to a source for rotation which can change the tension on the tape 92 and/or help to draw the tape 92 from the tape source 86. The taping device 82 may also be comprised of a cutter 94 that can selectively cut the tape 92 after a predetermined length has been located on the substrate 22.

The embodiment depicted in Fig. 1 shows two taping devices 82 spaced apart from one another on the support bar 80 and located above the vacuum table 30. A greater or fewer number of taping devices 82 can be used depending on the lengths of tape needed to be added to the substrate 22. It is also permissible for the taping devices 82 (which may include the cutter 94, rollers 90, etc.) to be connected to a controller 96 for the machine 20 wherein the controller 96 signals any of the connected taping devices 82 to tape or not tape for some or none of a particular substrate 22. Thus, taping devices 82 can be turned on or off to apply or not apply tape 92 to all, part or none of a particular substrate 22.

At least one cutter assembly 98 is also secured to the support bar 80 and located above the vacuum table 30. In Fig. 1, two cutter assemblies 98 are located on the two taping devices 82. As noted with the taping devices 82, however, a greater or fewer number of cutter assemblies 98 may be used. In any case, the cutter assemblies 98 can be connected to the controller 96 mentioned above so that the cutter assemblies 98 (or portion thereof) can be lowered or raised to cut all, part or none of a particular substrate 22.

In the depicted embodiment in Fig. 4, the cutter assembly 98 may be connected to the mounting plate 84 so that it extends forward of the taping device 82. The extension forward of the taping device 82 may be made by a bracket 100. A solenoid 102 may be connected to the bracket 100 and the controller 96. The controller 96 signals the solenoid 102 to raise or lower a cutter 104 with respect to the vacuum table 30.

The cutter 104 may be such as a single fixed blade, as shown in Fig. 4, or it may be such as a rotary cutter, as shown in Fig. 1. The single fixed blade may be axially and radially fixed to support bar 80.

One method of using the machine 20 will now be described. A substrate 22 is initially provided. In one embodiment, the substrate 22 may be a single sheet of material. The sheet of material may be paper, cardboard, plastic, wood, and/or metal. Preferably, only a single, discrete sheet is prepared one at a time in view of the taping step that must have access to one of the surfaces of the substrate 22.

The substrate 22 may be of almost any size or shape. Preferably, the substrate 22 is a square or rectangular shape. In one exemplary embodiment shown in Figs. 8 and 9, the substrate 22 may be such as 28 inches by 28 inches in length and width.

The substrate 22 may have a first side 106, a second side 108, opposite the first side 106. The first side 106 may have pigment containing material (not shown), such as ink, located thereon. The second side 108 may be printed, or it may be blank. The substrate 22 may have a perimeter comprised of the first edge 74, a second edge 112 opposite the first edge 74, a third edge 114 and a fourth edge 116 opposite the third edge 114.

The substrate 22 is located onto the vacuum table 30 either manually or with an automated machine. Preferably, to make locating the substrate 22 on the vacuum table 30 easier, the vacuum table 30 may be translated along the major axis 34 by the belt slide assembly 44. As shown in Fig. 1, the vacuum table 30 may be extended away from the support bar 80 in what may be referred to as a first position 118 of the vacuum table 3 0.

The machine 20 may have curtains 120 located about its perimeter to protect the machine 20 and the prevent people or things from entering the operating area of the machine 20. About most of the perimeter of the machine 20, a physical plexiglass and metal curtain system 20 is provided. One end of the machine may be provided with a light curtain 122 so that the vacuum table 30 can enter and exit the machine 20 as needed. When the vacuum table 30 is in the first position 118, it is at least partially extended from the machine 20 perimeter. This enables changing any of the vacuum table plates 54, 56, 58 and/or locating a substrate 22 on the vacuum table 30 easier and safer.

The substrate 22 is preferably located on the vacuum table 30 with the first printed side 106 down. In other words, the first printed side 106 is in direct facing contact with the vacuum table 30. The second side 108 of the substrate 22 is facing up. In addition, the third edge 114 is located in continuous and direct contact with the guide fence 48. The first edge 74 is located in direct and continuous contact with the top edge fence 72.

The vacuum source 62 may be engaged to selectively fix the substrate 22 to the vacuum table 30. Being so fixed, the substrate 22 is located in substantially parallel orientation to the vacuum table 30. In other words, while the substrate 22 may be substantially planar, the suction draws the substrate 22 flat against the vacuum table 30 so as to remove any creases, wrinkles or bubbles in the substrate 22. Being in a substantially planar orientation ensures that when the substrate 22 is cut and taped, it can be cut and taped cleanly and smoothly without creases, wrinkles or bubbles changing the cut lines or the application of tape 92.

The vacuum table 30 is then moved from the first position 118, such as by engaging the motor 46 of the belt slide assembly 44, with the substrate 22 fixed thereon. The vacuum table 30 is drawn into the machine 20 along the major axis 34.

The cutter 104 makes initial contact with the first, or leading, edge 74 of the substrate 22. The cutter 104 cuts through the leading edge 74, across an entire face 124 of the substrate 22 to the second opposite, or trailing, edge 112 of the substrate 22. The first cut 126 is parallel to the first and second edges 74, 112. This first cut 126, and any subsequent cuts, extend through the substrate 22 from the first side 106 through to the second side 108. It can be appreciated that the vacuum table 30 moves in a perpendicular direction to the cutter 104 along a single plane.

As noted above, if there are two or more cutters 104, the cutters 104 may simultaneously cut the substrate 22. It is also possible that any of the cutters 104 are selectively radially movable and have been raised so as not to cut the substrate 22 during this step.

As can be appreciated from the figures, the taping device 82 is positioned axially directly behind the cutter 104. The taping device 82 is designed to tape the cut (such as the first cut 126) in the substrate 22 that the cutter 104 just made. The taping device 82 applies a first length of tape 128 along the first cut 126 in this first cutting and taping pass. The first length of tape 128 may extend continuously from the first edge 74 across the entire face 124 of the substrate 22 to the second edge 112. It can be appreciated that only the second side 108 of the substrate 22 receives the tape 92/128.

Based on the above, it can be appreciate that a first portion 130 of the first length 128 of tape 92 is applied to a first portion 132 of the first cut 126 before the first cut 126 reaches the third edge 114. In other words, before the cutter 104 reaches the third edge 114, tape 92 has already been applied to the first cut 126.

The first length of tape 128 has a center section 134 that is located over the first cut 126. The first length of tape 128 also has tape edge sections 136 that are located on either side of the center section 134. The tape edge sections 136 are secured to the substrate 22.

The tape 92 preferably extends the length of the cut 126. The width of the tape 92, however, is less than the width of the substrate 22, and less than the width of any of the sections (described below). Thus, a majority of the second side 108 of the substrate 22 does not have tape 92 on its surface while a minority of the second side 108 has the tape 92 over the cut 126.

Again, as can be appreciated from the above if another cut is to be made in the substrate 22, a second taping device 140 may be positioned axially directly behind a second cutter 142 so that it can apply a second 140 length of tape 144 along the additional cut in the same manner as described above, as shown in Fig. 8. It can also be appreciated these steps can be repeated depending on the number of cuts needed in the substrate 22 during the first pass.

When the substrate 22 has been cut through the second, or trailing edge 112, and the tape 92 has been applied to the cut 126, the vacuum table 30 may have moved from the first position 118, along the major axis 34 to a second position 146 in the machine 20, as shown in Fig. 1. The vacuum table 30 with the cut and taped substrate 22 secured thereto may then return to the first position 118.

The first cutting and taping pass divides the substrate 22 into at least first and second sections when a single cutter is used. The first length of tape 128 flexibly secures the two sections together.

In the embodiment where two cutting blades 104, 142 are used in the first cutting and taping pass, the first and second cutting blades 104, 142 cut the substrate 22 from the first edge 74, across the entire face 124 of the substrate 22 to the opposite second edge 112 with the first and second cutting blades 104, 142 dividing the substrate 22 into a first section 148, a second section 150 and a third section 152. The blades 104, 142 may be positioned so that the first, second and third sections 148, 150, 152 have an equal height but at least one section has an unequal width. In this embodiment, the first and second sections 148, 150 are taped to one another, and the second and third sections 150, 152 are taped to one another.

One embodiment of a substrate with parallel first and second cuts, which have also been taped, is depicted in Fig. 8.

Back at the first position 118, the suction on the vacuum table 30 may be reduced or turned off. With the suction reduced or removed, the substrate 22 can be turned on the vacuum table 30. Preferably, the substrate 22 is rotated 90 degrees on the table 30, as shown by the arrow in Fig. 1. The substrate 22 is located on the table 30 such that the third edge 114 is located in continuous and direct contact with the top edge fence 72 and the second edge 112 is located in continuous and direct contact with the guide fence 68.

The source of vacuum 62 may be engaged again so that suction selectively draws the rotated substrate to the vacuum table 30.

The vacuum table 30 with the rotated substrate 22 secured thereon is moved from the first position 118 in a second cutting and taping pass so that the cutter 104 makes the continuous second cut 138 from the third edge 114, across the entire face 124 of the substrate 22 to the fourth edge 116. A second length of tape 154 is located in a manner as described above along the second cut 138 in the second cutting and taping pass. Of course, if additional cuts are made that need to be taped during this second pass, those can be accomplished simultaneously as the second cut 138 is made and taped.

In one embodiment, during the second cutting and taping pass the first cutter 94 blade cuts the substrate 22 while the second cutting blade 142 is in a retracted position that does not cut the substrate 22. Thus, during the second cutting and taping pass the first, second and third sections 148, 150, 152 are divided in half, creating six sections 156, 158, 160 as shown in Fig. 9. The second length of tape 154 flexibly secures the six sections 148, 150, 152, 156, 158, 160 together. The second cut 138 is parallel to the third and fourth edges 114, 116.

The vacuum table 30 with the cut and taped substrate 22 can then be located in the first position 118. The vacuum can be disengaged and the cut and taped substrate 22 can be removed from the vacuum table 30.

The resulting product is a substrate 22 that has been cut and taped in at least two locations on the substrate 22. The cut and taped portions form flexible joints in the substrate 22. When the substrate 22 is located in a flat or planar orientation the joints are substantially invisible. Thus, the printed image on the first side 106 of the substrate 22 remains visually intact.

The substrate 22 can be folded along the flexible joints to make it more compact for transport, mailing or simply use. Namely, the flexible joints permit the substrate 22 to be folded such that only one section of interest is displayed and the other sections are folded behind it in a compact fashion. Such an embodiment is helpful for a map or chart so that the entire map or chart does not have to be unfolded to be used.

It has also found to be advantageous that at least one of the sections 148, 150, 152, 156, 158, 160 are not the same size as the others. By not being the same size, the sections can be almost directly abutting one another when they are taped and the sections to not catch on one another when they are folded at the joint line.

In yet another embodiment, the cutters 104, 142, individually or together, can create their respective cuts entirely through the substrate 22 as noted above. And, the cuts can be taped, also as noted above. In this embodiment, the taped cuts can then be selectively slit. In other words, at least a portion of the tape over the cuts can be slit The cutting of the taped cuts will be called slitting or a slit

By way of one example only, one or more sections of tape over one or more of the cuts may be slit. The slits do not extend the entire length of the taped cut. Instead, the slits only extend for a predetermined length of the taped cut

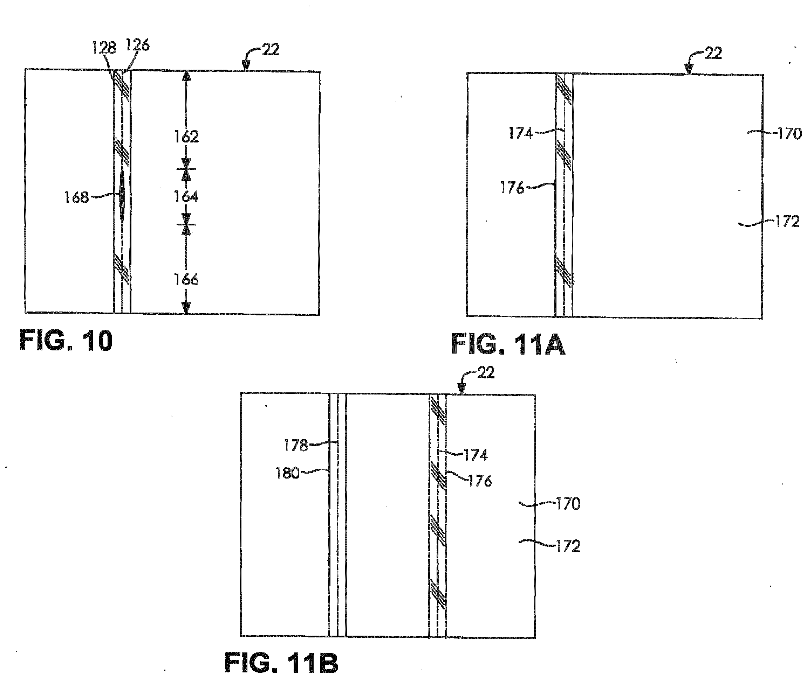

As shown in Fig. 10, the taped cut may be divided into sections, such as thirds. It may be that a first third 162 of the taped cut is not slit, a second third 164 of the taped cut is slit and a third third 166 of the taped cut is not slit. The first and third third may bound the second third. While the above discusses dividing the taped cut into thirds, other divisions may be permissible. Typically, the divisions and the slits are related to how the substrate may be folded and the number of sections in the substrate. In some cases, selective slitting of a taped cut has been found to facilitate the subsequent folding of the substrate along the above-mentioned joints. This may be in part because the joints prefer to bend in one direction and not a second opposite direction. When the joint is bent in the second opposite direction, that is where a slit may facilitate the folding process.

While Fig. 10 shoes a middle section of the taped cut that is slit, other combinations are permissible. With further reference to Fig. 10, either (or both) end section that bounds the middle section might be slit

Figs. 11A and 11B depict another embodiment of the substrate 22. Fig. 11A depicts one side 106 of the substrate 22 facing up. The side 106 in this case may be such as the back, or rear, side of the substrate 22. The substrate 22 has been cut from a back side 170 to a front side 172 using the apparatus and steps described above. This results in a back to front cut 174. The cut 174 is a continuous cut extending entirely through the substrate 22. The cut 174 is taped also as described above. Preferably, a length of tape 176 extends continuously over the cut 174. Fig. 11A depicts the taped cut in one location, however, the taped cut may be located in other areas.

Fig. 11B depicts the front side 172 of the substrate 22. Thus, from Fig. 11A to Fig. 11B, the substrate has been flipped 180 degrees. A front to back cut 178 is made in the substrate 22. In other words, the substrate 22 has been cut from the front side 172 to the back side 170 resulting in a continuous cut extending entirely through the substrate 22.

A length of tape 180 extends continuously over the cut 178. The tape length 180, however, is preferably a transparent tape. The transparent tape permits any printed image or the like on the front side 172 to be readily visible therethrough without blocking or distorting the image.

Transparent tape may be used in any of the embodiments identified herein. Further, the transparent tape may be applied to any or part of a cut in the substrate on a printed side of the substrate.

It can be appreciated from the foregoing that two flexible joints are created in the substrate 22. The substrate 22 can be folded along the flexible joints to reduce the size of the substrate 22 from its original large size to a fraction of its original size.

The flexible joints prefer to be moved such that the side of the joint that is not taped breaks or bends and creates the joint. By cutting and taping one side 170 or 172 and then cutting an taping the opposite side 170 or 172, two flexible joints are formed in the substrate 22 that break/bend in opposite directions from one another. This permits the substrate 22 to be folded in various orientations resulting in a more efficient and effective folding process and folded product.

Additional cuts and tape lengths as described above may be applied to the substrate depending on the size of the substrate 22 and the number of flexible joints.

With reference to the disclosure and the figures above, such as Figs. 9 and 10, any of the cut and taped portions can be slit in any combination. In other words, the slit 168 shown in Fig. 10 can be located anywhere along the tape lengths 128, 154. Further, slit 168 can be located in one or more instances along tape length 128 and/or 154. By selectively providing one or more slits the sections 148, 150, 152, 156, 158 and/or 160 (or any other number of sections crated in the substrate) may be moved or folded more easily with respect to one another. Thus, the sections can be folded with respect to one another so that some or all of the sections are folded directly behind one another for easy viewing/handling of the selected sections or the above-mentioned storage or transport of the substrate.

In accordance with the provisions of the patent statutes, the method and apparatus has been described in what is considered to represent its preferred embodiments. However, it should be noted that the method and apparatus can be practiced otherwise than as specifically illustrated and described without departing from its spirit or scope.

The subject-matter of the present invention relates, inter alia, to the following aspects:
1. A method for cutting and taping a substrate, comprising:
   providing a substrate having a first printed side, a second side opposite the first side, and a perimeter defined by a first edge, a second edge opposite the first edge, a third edge and a fourth edge opposite the third edge;
   locating the substrate on a vacuum table with the first printed side in direct facing contact with the vacuum table, the vacuum table being in a first position;
   engaging suction on the vacuum table to selectively fix the substrate to the vacuum table and to orient the substrate parallel said vacuum table;
   moving the vacuum table with the substrate fixed thereon from the first position in a first cutting and taping pass wherein a first cutter makes a continuous first cut from the first edge of said substrate, across an entire face of said substrate to the second opposite edge of said substrate;
   applying a first length of tape along said first cut in the first cutting and taping pass;
   returning the vacuum table to the first position;
   disengaging suction on the vacuum table;
   rotating the substrate 90 degrees on the vacuum table;
   engaging suction on the vacuum table to selectively draw the rotated substrate to the vacuum table;
   moving the vacuum table with the rotated substrate secured thereon from the first position in a second cutting and taping pass so that said first cutter makes a continuous second cut from the third edge, across the entire face of the substrate to the fourth edge; and
   applying a second length of tape along said second cut in the second cutting and taping pass.
2. The method of aspect 1, further comprising locating said substrate in direct contact
   with a guide fence on said vacuum table, wherein said first edge of said substrate is located in direct contact with an inside edge surface of said locator bar and at least a portion of said third edge is located in direct contact with a tape edge fence.
3. The method of aspect 1, further comprising returning said vacuum table with said cut and taped substrate to the first position after said second cutting and taping pass.
4. The method of aspect 1, further comprising disengaging the suction on the vacuum table and removing the cut and taped substrate from the vacuum table after the second cutting and taping pass.
5. The method of aspect 1, wherein said first cutting and taping pass divides the substrate into at least two sections and said first length of tape flexibly secures the two sections together.
6. The method of aspect 5, wherein said second cutting and taping pass divides the substrate into at least four sections and said second length of tape flexibly secures the four sections.
7. The method of aspect 1, wherein said first cutter is axially and radially fixed to a support bar extending across said vacuum table wherein said vacuum table selectively moves beneath said support bar.
8. The method of aspect 7, wherein a second cutter is provided on said support bar, wherein said second cutter is selectively radially moveable and said first cutter is fixed.
9. The method of aspect 1, wherein in said first cutting and taping pass said first cutter and a second cutter simultaneously cut said substrate from said first edge, across said entire face of said substrate to the opposite second edge, said cutters dividing the substrate into a first section, a second section and a third section.
10. The method of aspect 9, wherein said first, second and third sections have an equal height but at least one section has an unequal width.
11. The method of aspect 10, wherein said first and second sections are taped to one another, and the second and third sections are taped to one another.
12. The method of aspect 11, wherein said first and second lengths of tape have a center section over said cuts, said first and second lengths of tape also having tape edge sections on either side of said center section wherein said tape edge sections are secured to said substrate.
13. The method of aspect 1, wherein in the second cutting and taping pass the first cutter cuts the substrate while the second cutter is in a retracted position that does not cut the substrate.
14. The method of aspect 1, wherein only said second side of said substrate receives said first or said second lengths of tape.
15. The method of aspect 1, wherein said second cut extends through and is transverse to said first cut.
16. The method of aspect 1, wherein said vacuum table moves in a perpendicular direction to said first cutter along a single plane.
17. The method of aspect 1, wherein said first and second cuts extend through said substrate from said first side through to said second side.
18. The method of aspect 1, wherein said first cut is parallel to said first and second sides and said second cut is parallel to said third and fourth sides.
19. The method of aspect 1, wherein said first length of tape and said second length
   of
   tape are both continuous.
20. The method of aspect 1, wherein a first portion of said first length of tape is applied to a first portion of said first continuous cut before said first continuous cut reaches said third side.
21. A method for cutting and taping a substrate, comprising:
   providing a substrate having a first printed side, a second side opposite the first side, and a perimeter defined by a first edge, a second edge opposite the first edge, a third edge and a fourth edge opposite the third edge;
   creating a first flexible joint in the substrate by making a first continuous cut through said first printed side to said second side, said first cut creating a first section and a second section, and locating a first length of tape along edge sections of said first section and said second section on said second side to secure the sections together; and
   creating a second flexible joint in the substrate by making a second continuous cut through said first printed side to said second side, said second cut creating a third section and a fourth section, wherein said second cut is transverse said first cut, and locating a second length of tape connecting the third section and the fourth section on said second side.
22. The method of aspect 21, wherein said first cut extends from said first edge, across an entire face of the substrate, to the second edge and said second cut extends from said third edge, across the entire face of the substrate, to the fourth edge.
23. The method of aspect 21, where said lengths of tape are continuous and are only applied to said second side.
24. The method of aspect 21, wherein at least part of at least one of the taped cuts of one of said joints is slit after being taped.
25. A cut and taped substrate, comprising:
   a first printed side, a second side opposite the first side, and a perimeter defined by a first edge, a second edge opposite the first edge, a third edge and a fourth edge opposite the third edge, wherein said sides are substantially parallel one another;
   a first flexible joint, comprising:
      a first cut through said first printed side to said second side, said first cut creating a first section and a second section;
      a first length of tape connecting first section and said second section on only said second side;
   a second flexible joint, comprising:
      a second cut through said first printed side to said second side, said second cut creating a third section and a fourth section, wherein said second cut is transverse said first cut; and
      a second length of tape connecting the third section and the fourth section only on said second side.
26. The substrate of aspect 25, wherein said first and second lengths of tape are as long as their respective sections, but not as wide as their respective sections.
27. The substrate of aspect 25, wherein said first and second sections are cut so that they are equal height but unequal width.
28. The substrate of aspect 25, wherein said first flexible joint intersects transversely with said first flexible joint.
29. The substrate of aspect 25, wherein a first cutting and taping pass creates said
   first
   cut and applies said first length of tape while simultaneously creating another cut from said first edge to said second edge which is also taped which creates three sections, and a second cutting and taping pass creates said second cut transverse to said first cut and applies said second length of tape which creates six sections that are taped together.
30. The substrate of aspect 24, wherein at least part of at least one of the taped cuts are slit after being taped.
31. A cut and taped substrate, comprising:
   a first side, a second side opposite the first side;
   a first flexible joint, comprising:
      a first cut through said second side to said first side, said first cut creating a first section and a second section;
      a first length of tape applied to said second side over said first cut, said first length of tape connecting said first section and said second section;
      wherein said first flexible joint folds in a first direction;
   a second flexible joint, comprising:
      a second cut through said first side to said second side; and
      a second length of tape applied to said first side over said second cut;
      wherein said second flexible joint folds in a second direction opposite said first direction.

## Claims

1. A cut and taped substrate, comprising:
a first printed side, a second side opposite the first side, and a perimeter defined by a first edge, a second edge opposite the first edge, a third edge and a fourth edge opposite the third edge, wherein said sides are substantially parallel one another;
a first flexible joint, comprising:
a first cut through said first printed side to said second side, said first cut creating a first section and a second section;
a first length of tape connecting first section and said second section on only said second side;
a second flexible joint, comprising:
a second cut through said first printed side to said second side, said second cut creating a third section and a fourth section, wherein said second cut is transverse said first cut; and
a second length of tape connecting the third section and the fourth section only on said second side.

2. The substrate of claim 1, wherein said first and second lengths of tape are as long as their respective sections, but not as wide as their respective sections.

3. The substrate of claim 1, wherein said first and second sections are cut so that they are equal height but unequal width.

4. The substrate of claim 1, wherein said first flexible joint intersects transversely with said first flexible joint.

5. The substrate of claim 1, wherein a first cutting and taping pass creates said first cut and applies said first length of tape while simultaneously creating another cut from said first edge to said second edge which is also taped which creates three sections, and a second cutting and taping pass creates said second cut transverse to said first cut and applies said second length of tape which creates six sections that are taped together.

6. The substrate of claim 1, wherein at least part of at least one of the taped cuts are slit after being taped.

7. A cut and taped substrate, comprising:
a first side, a second side opposite the first side;
a first flexible joint, comprising:
a first cut through said second side to said first side, said first cut creating a first section and a second section;
a first length of tape applied to said second side over said first cut, said first length of tape connecting said first section and said second section;
wherein said first flexible joint folds in a first direction;
a second flexible joint, comprising:
a second cut through said first side to said second side; and
a second length of tape applied to said first side over said second cut;
wherein said second flexible joint folds in a second direction opposite said first direction.
